# EUROPÄISCHE PATENTANMELDUNG

(11) **EP 2 479 400 A1**
(43) Veröffentlichungstag der Anmeldung: **25.07.2012**
(21) Anmeldenummer: 12150098.7
(22) Anmeldetag: 03.01.2012
(51) Int. Cl.: F01N 13/18, F01N 3/28, F16L 27/10

(54) **Flexibles Leitungsteil für eine Abgasleitung eines Verbrennungsmotors**

(30) Priorität: 20.01.2011 DE 102011008980
(71) Anmelder: Witzenmann GmbH, 75175 Pforzheim (DE)
(72) Erfinder: Elsässer, Fabian, 75245 Neulingen (DE)
(74) Vertreter: Lemcke, Brommer & Partner

(57) **Zusammenfassung**

Die vorliegende Erfindung betrifft ein flexibles Leitungsteil für eine Abgasleitung 2, 3 eines Verbrennungsmotors. Dieses umfasst einen zumindest abschnittsweise ringgewellten oder schraubengangförmig gewellten Metallbalg 1 mit einem stromaufwärts angeordneten, zylindrischen vorderen Endabschnitt 4 und einem stromabwärts angeordneten, zylindrischen hinteren Endabschnitt 5, sowie einen direkt oder indirekt am zylindrischen vorderen Endabschnitt 4 des Metallbalgs 1 angebrachten Katalysator 8 und/oder Partikelfilter zur Reinigung eines Abgasstroms des Verbrennungsmotors. Der Katalysator 8 und/oder Partikelfilter ist zumindest teilweise innerhalb des Metallbalgs 1 angeordnet und weist dort einen Außendurchmesser auf, der kleiner als die lichte Weite des Metallbalgs 1 ist. Des weiteren sitzt auf dem Außenumfang des Katalysators 8 und/oder Partikelfilters, oder auf einem diesen umgebenden Stützrohr 7 ein Abstandselement 10 mit dämpfenden Eigenschaften.

## Beschreibung

Die Erfindung betrifft ein flexibles Leitungsteil für eine Abgasleitung eines Verbrennungsmotors nach dem Oberbegriff des Anspruchs 1.

Ein flexibles Leitungsteil der vorliegenden Art umfasst demnach einen zumindest abschnittsweise ringgewellten oder schraubengangförmig gewellten Metallbalg, der sich stromaufwärts in einen zylindrischen vorderen Endabschnitt und stromabwärts in einen zylindrischen hinteren Endabschnitt fortsetzt. Mit diesen zylindrischen Endabschnitten wird der Metallbalg in die Abgasleitung eingesetzt. Am zylindrischen vorderen Endabschnitt des Metallbalgs ist direkt oder indirekt ein Katalysator und/oder ein Partikelfilter zur Reinigung eines Abgasstroms des Verbrennungsmotors angebracht. Dieser Katalysator bzw. Partikelfilter ist zumindest teilweise innerhalb des Metallbalgs angeordnet und weist zumindest dort einen Außenumfang auf, der kleiner als die lichte Weite des Metallbalgs ist.

Gasdichte Metallbälge werden in eine Abgasleitung eines Verbrennungsmotors, insbesondere in die Abgasleitung eines Antriebsmotors eines Kraftfahrzeugs eingebaut, um Vibrationen, die der pulsierende Abgasstrom des Verbrennungsmotors erzeugt, oder aber Körperschwingungen des Motors von der Abgasanlage, die insbesondere bei einem Kraftfahrzeug an dessen Boden befestigt ist, abzukoppeln, da solche Vibrationen insbesondere unerwünschte Brummgeräusche verursachen. Daneben können Vibrationen die Lebensdauer der Abgasanlage beeinträchtigen. Ferner soll ein Metallbalg außerdem sonstige Bewegungen des Verbrennungsmotors, insbesondere Lastwechselbewegungen, oder auch Wärmeausdehnungsbewegungen von der weiterführenden Abgasleitung und somit von der Abgasanlage abkoppeln. Hierfür ist der Metallbalg in der Lage, sich nicht nur axial, sondern auch angular und lateral zu bewegen.

Um insbesondere im Anwendungsgebiet in der Abgasleitung eines Kraftfahrzeugs Bauraum zu sparen - vor allem wertvollen motornahen Bauraum - ist es beispielsweise aus der EP-A-2 101 049 bekannt, einen in der Abgasleitung eines Verbrennungsmotors eines Kraftfahrzeugs vorzusehenden Katalysator zur Reinigung des Abgasstroms des Verbrennungsmotors zumindest teilweise in das Innere des Metallbalgs einzusetzen. Hierzu wird der Katalysator am vorderen Endabschnitt des Metallbalgs angebracht, im Stand der Technik nach der EP-A-2 101 049 geschieht dies indirekt über einen am zylindrischen vorderen Endabschnitt des Metallbalgs befestigten Flansch, an dem der Katalysator mittels eines zweiten Flansches festgelegt wird. Von diesem Stand der Technik geht die vorliegende Erfindung aus.

Bei einem flexiblen Leitungsteil der vorliegenden Art kann anstelle eines Katalysators auch ein Partikelfilter oder ein sonstiges Bauteil zur Abgasreinigung in den Metallbalg eingesetzt werden. Gegebenenfalls können auch sowohl ein Katalysator als auch ein Partikelfilter hintereinander geschaltet in den Metallbalg eingesetzt werden. In all diesen Fällen ist jedenfalls vorgesehen, dass der Katalysator bzw. der Partikelfilter jedenfalls in demjenigen Bereich, mit dem er in den Metallbalg hineinreicht, einen Außendurchmesser aufweist, der kleiner als die lichte Weite des Metallbalgs ist. Es sollte also immer ein Ringraum zwischen dem Katalysator bzw. dem Partikelfilter und den Innenkrempen der Balgwellen des Metallbalgs verbleiben, damit der Metallblag laterale und angulare Bewegungen ausführen kann, ohne an den innenliegenden Katalysator bzw. Partikelfilter anzustoßen.

Nun sollte jedoch der durchströmbare Querschnitt des Katalysators bzw. des Partikelfilters nicht viel kleiner sein, als der Querschnitt der Abgasleitung, um keine nachteilige Engstelle zu erzeugen. Gleichzeitig sollte der Metallbalg für eine gute Schwingungsentkopplung und wegen des begrenzten vorgegebenen Bauraums keinen zu großen Durchmesser aufweisen. Diese Vorgaben führen dazu, dass der Ringraum zwischen dem Außenumfang des Katalysators und den Innenkrempen des Metallbalgs so klein wie möglich gehalten werden sollte und jedenfalls nicht beliebig vergrößert werden kann, sondern innerhalb recht enger Grenzen bleiben muss. Dies führt bei größeren angularen oder lateralen Auslenkungen des Metallbalgs mitunter dazu, dass der Metallbalg am Katalysator und/oder Partikelfilter anschlägt. Im Interesse der Lebensdauer dieser Abgasnachbehandlungsvorrichtung sollte ein hartes Anschlagen jedoch unbedingt vermieden werden.

Ausgehend von diesem Stand der Technik liegt der vorliegenden Erfindung die Aufgabe zugrunde, ein flexibles Leitungsteil der eingangs genannten Art hinsichtlich seines Einsatzspektrums sowie hinsichtlich seiner Robustheit zu verbessern.

Gelöst ist diese Aufgabe durch ein flexibles Leitungsteil mit den Merkmalen des Anspruchs 1. Bevorzugte Ausgestaltungen und Weiterbildungen der vorliegenden Erfindung sind in den Ansprüchen 2 bis 12 niedergelegt.

Gemäß der vorliegenden Erfindung ist demnach vorgesehen, dass auf den Außenumfang des Katalysators und/oder Partikelfilters, oder auch auf einem diesen umgebenden Stützrohr, ein Abstandselement mit dämpfenden Eigenschaften sitzt. Es kann sich demnach um ein Abstandselement handeln, das nachgiebig ist und lediglich dämpfende Eigenschaften im Sinne einer Stoßdämpfung aufweist; das Abstandselement kann jedoch auch schwingungsdämpfende Eigenschaften aufweisen.

In Anbetracht der innerhalb eines flexiblen Leitungsteils der vorliegenden Art vorherrschenden Temperaturen ist es bevorzugt, das erfindungsgemäß auf den Katalysator bzw. Partikelfilter oder dessen Stützrohr sitzende Abstandselement aus einem Drahtgestricke aus hitzebeständigen, insbesondere metallischen und/oder keramischen Drähten zu fertigen. Anstatt eines Gestrickes, das grundsätzlich aus Maschenreihen besteht, kann auch ein Drahtpressring mit ungeordnet gebogen verlaufenden, hitzebeständigen Drähten als Abstandselement verwendet werden. Die Drähte können hierbei einfädig oder mehrfädig ausgebildet sein, und es liegt auch im Rahmen der vorliegenden Erfindung, Verbundmaterial oder eine Kombination von ein- oder mehrfädigen metallischen oder keramischen Drähten zu verwenden. Sowohl ein aus einem Drahtgestricke bestehendes Abstandselement als auch ein Drahtpressring kann im Rahmen der vorliegenden Erfindung einlagig oder mehrlagig ausgebildet sein. Ferner liegt es im Rahmen der Erfindung, das Abstandselement als hitzebeständiges Gewebe oder Gewirke zu fertigen.

Das erfindungsgemäße Abstandselement ist demnach vorzugsweise mindestens ein einlagiger oder mehrlagiger Gestrickeschlauch und/oder Gestrickering und/oder Gestrickestreifen, der beispielsweise helixförmig um den Katalysator gewunden ist, und/oder ein oder mehrere Drahtpressstreifen und/oder Drahtpressringe und/oder mehrere, insbesondere umfangsverteilt angeordnete, einzelne Gestrickekissen und/oder ein Gewebering bzw. Gewebeschlauch. Es gibt also die unterschiedlichsten Ausprägungen eines erfindungsgemäß vorgesehenen Abstandselements, denen allen gemeinsam ist, dass sie einen hart anschlagenden Kontakt zwischen dem Metallbalg und dem innerhalb dessen angeordneten Katalysator bzw. Partikelfilter auch dann verhindern, wenn der Metallbalg außergewöhnlich stark lateral oder angular ausgelenkt wird. Die dämpfende Eigenschaft des erfindungsgemäßen Abstandselements verhindert gegenseitige Beschädigungen.

Besondere Vorteile ergeben sich im Rahmen der vorliegenden Erfindung, wenn das Abstandselement so ausgestaltet und angeordnet ist, dass es permanent in Kontakt mit dem Metallbalg steht. Soweit es als Gestrickeschlauch oder Drahtpressring ausgebildet ist, wird es also an zumindest einer Stelle den gesamten Ringraum zwischen dem Außenumfang des Katalysators bzw. Partikelfilters und den Innenkrempen des Metallbalgs ausfüllen. Dies ist gleichzeitig eine bevorzugte Variante: Wenn zumindest ein Teil des Abstandselements ringförmig ausgebildet ist, im Bereich eines stromabwärtigen Endes des Katalysators oder Partikelfilters auf diesem oder seinem Stützrohr sitzt und einen Ringraum zwischen einerseits dem Katalysator oder Partikelfilter oder seinem Stützrohr, sowie andererseits dem Metallbalg vollständig ausfüllt, übernimmt das Abstandselement eine abdichtende Funktion dergestalt, dass der Abgasstrom daran gehindert wird, in den Ringraum zwischen dem Außendurchmesser des Katalysators bzw. Partikelfilters bzw. Stützrohrs und dem Metallbalg zu gelangen. Insofern der Katalysator relativ weit in den Metallbalg hineinreicht, wird das Innere des Metallbalgs dann auch vor allzu großer Hitze des Abgasstroms geschützt.

Das permanente Anliegen des erfindungsgemäßen Abstandselements am Metallbalg, was beispielsweise auch mittels dreier umfangsvereilt angeordneter Gestrickekissen realisiert werden kann, ohne eine abdichtende Wirkung hervorzurufen, bietet den großen Vorteil, dass das Abstandselement zur Bedämpfung des Metallbalgs dienen kann. Denn Metallbälge sind ohne weiteres in der Lage, axiale, laterale und angulare Bewegungen sowie Wärmeausdehnungs-Längenänderungen aufzunehmen; Schwingungen und Vibrationen werden von einem Metallbalg allerdings nur dann nicht weitergeleitet, soweit diese ausreichend bedämpft sind.

Ein Abstandselement mit schwingungsdämpfenden Eigenschaften, das permanent in Kontakt mit dem Metallbalg steht, ist vorteilhafterweise in der Lage, die Eigenfrequenzen des Metallbalgs so zu bedämpfen, dass er bei den entsprechenden Schwingungsanregungen nicht in eine Resonanzschwingung gerät. Mit dieser Weiterbildung der Erfindung kann gegebenenfalls sogar auf zusätzlich schwingungsdämpfende Maßnahmen, wie der übliche, außen auf den Metallbalg aufgezogene Gestrickeschlauch, verzichtet werden. Dies senkt die Kosten des gesamten flexiblen Leitungsteils signifikant.

Nach einer weiteren bevorzugten Ausgestaltung der vorliegenden Erfindung sitzen der Katalysator oder der Partikelfilter oder beide in einem Stützrohr, das gleichzeitig als Flammrohr und damit als Hitzeschutz gegenüber dem Balg fungieren kann, und auf dem wiederum das Abstandselement sitzt sowie dort mittels Sicken, Wülsten oder Ausbrechungen fixiert ist. Das Stützrohr kann sowohl ein- als auch mehrlagig sein und durch entsprechenden Abstand eine Luftspaltisolierung gegenüber dem Balg bilden. Gerade dann, wenn ein Abstandselement mit nur geringer axialer Ausdehnung oder in Form von einzelnen Kissen verwendet wird, bietet es Vorteile, dieses auf dem Stützrohr zu fixieren, so dass es im Betrieb nicht verrutschen kann.

Bei Verwendung eines Katalysators und/oder Partikelfilters mit bedingter Eigenstabilität und ohne Stützrohr bietet es hingegen Vorteile, wenn das Abstandselement direkt auf dem Katalysator und/oder Partikelfilter sitzt und diesen umlaufend oder umfangsverteilt am Metallbalg radial abstützt. Hierdurch wird das Stützrohr überflüssig, und der Balg kann gleichzeitig wirksam bedämpft werden, wodurch auch eine äußere Bedämpfung des Balges überflüssig werden kann, während ein Anschlagen des Metallbalgs am Katalysator bzw. Partikelfilter ausgeschlossen ist.

Alternativ oder zusätzlich kann das Abstandselement bzw. ein weiteres Abstandselement den Katalysator und/oder Partikelfilter im wesentlichen ganzflächig umgeben und die Funktion des Stützrohrs übernehmen. Dies kann auch beispielsweise ein Gestrickeschlauch und/oder Geflechtsschlauch sein, so dass der Katalysator oder Partikelfilter beweglich im Balg angebunden ist und den angualen bzw. lateralen Bewegungen nachfolgen kann. Soweit das ganzflächig umgebende Abstandselement mit radialen Verdickungen versehen ist, kann sich ein weiteres Abstandselement erübrigen. Gerade bei Verwendung eines Gestrickeschlauchs oder Geflechtsschlauch als Abstandselement können solche Verdickungen durch bereichsweises Verpressen leicht hergestellt werden.

Selbstverständlich kann auch im Rahmen der vorliegenden Erfindung außen auf dem Metallbalg ein schwingungsdämpfendes Element vorgesehen sein, insbesondere ein Gestrickeschlauch oder ein Geflechtsschlauch.

Im folgenden werden anhand der Zeichnungen mehrere Ausführungsbeispiele für ein flexibles Leitungsteil, das gemäß der vorliegenden Erfindung ausgebildet ist, näher beschrieben und erläutert. Es zeigen:
- Figur 1: eine schematische seitliche Schnittdarstellung eines ersten Ausführungsbeispiels für ein flexibles Leitungsteil nach der Erfindung;
- Figur 2: eine schematische Schnittdarstellung eines zweiten Ausführungsbeispiels für ein flexibles Leitungsteil nach der Erfindung;
- Figur 3: eine schematische Schnittdarstellung eines dritten Ausführungsbeispiels für ein flexibles Leitungsteil nach der Erfindung;
- Figur 4: eine schematische Schnittdarstellung eines vierten Ausführungsbeispiels für ein flexibles Leitungsteil nach der Erfindung;
- Figur 5: eine schematische Schnittdarstellung eines fünften Ausführungsbeispiels für ein flexibles Leitungsteil nach der Erfindung;
- Figur 6: eine schematische Frontansicht auf das Ausführungsbeispiel aus Figur 5;
- Figur 7: eine schematische Schnittdarstellung eines siebten Ausführungsbeispiels für ein flexibles Leitungsteil nach der Erfindung;
- Figur 8: eine schematische Schnittdarstellung eines achten Ausführungsbeispiels für ein flexibles Leitungsteil nach der Erfindung;
- Figur 9: eine schematische Schnittdarstellung eines neunten Ausführungsbeispiels für ein flexibles Leitungsteil nach der Erfindung;
- Figur 10: eine schematische Schnittdarstellung eines zehnten Ausführungsbeispiels für ein flexibles Leitungsteil nach der Erfindung;
- Figur 11: eine schematische Schnittdarstellung eines elften Ausführungsbeispiels für ein flexibles Leitungsteil nach der Erfindung;

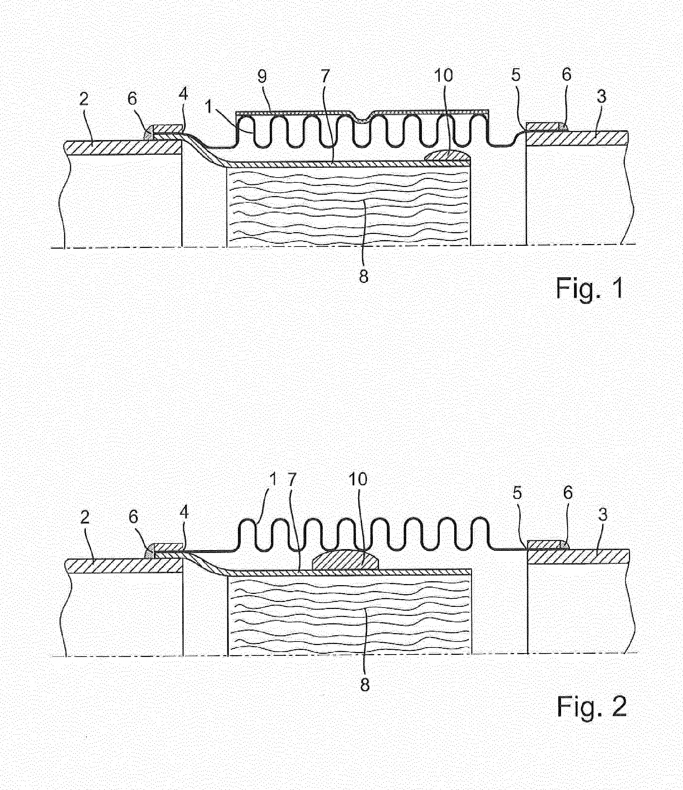

In Figur 1 ist in einer schematischen seitlichen Schnittdarstellung ein erstes Ausführungsbeispiel für ein erfindungsgemäß ausgestaltetes flexibles Leitungselement dargestellt. Das flexible Leitungselement besteht hier aus einem ringgewellten Metallbalg 1, der zwischen ein stromaufwärts angeordnetes, von einem (nicht dargestellten) Antriebsmotor eines Kraftfahrzeugs kommendes, vorderes Abgasrohr 2 und ein stromabwärts angeordnetes, zur (ebenfalls nicht dargestellten) Abgasanlage des Kraftfahrzeugs führendes, hinteres Abgasrohr 3 eingesetzt ist. Hierzu weist der Metallbalg 2 stromaufwärts einen zylindrischen vorderen Endabschnitt 4 und stromabwärts einen zylindrischen hinteren Endabschnitt 5 auf, die jeweils mittels einer Schweißverbindung 6 am entsprechenden Abgasrohr 2, 3 gasdicht und stoffschlüssig festgelegt sind.

Am stromaufwärtigen, vorderen Endabschnitt 4 ist mit derselben Schweißverbindung 6 ein Flammschutzrohr am vorderen Abgasrohr 2 festgelegt, das nicht nur die Funktion eines herkömmlichen Flammschutzrohrs übernimmt, also die Innenkrempen des Metallbalgs 1 vor den heißen Abgasen des Verbrennungsmotors schützt, sondern vorliegend verlängert ist und als Stützrohr 7 für einen Katalysator 8 zur Abgasreinigung fungiert. Im Stützrohr 7 kann anstatt eines Katalysators, oder aber auch zusätzlich zu diesem, ein Partikelfilter oder dergleichen Vorrichtung zum Reinigen des Abgasstroms sitzen. Um zu verhindern, dass der Metallbalg 1 durch motorseitige Vibrationen in Resonanzschwingungen versetzt wird, ist ein Gestrickestrumpf aus Metalldrähten als Außengestricke 9 auf den Metallbalg 1 aufgezogen worden. Dieses Außengestricke 9 dämpft etwaige Resonanzschwingungen bzw. verstimmt die Eigenfrequenzen des Metallbalgs 1, so dass dieser auch typische Motorvibrationen vom weiterführenden Abgasrohr 3 abkoppeln kann.

Gemäß der vorliegenden Erfindung sitzt auf dem Stützrohr 7 des Katalysators 8 ein Abstandselement 10, das hier als Drahtpressring aus Metalldrähten ausgebildet ist. Beispielsweise bei einer etwaigen angularen Auslenkung des Metallbalgs 2 aufgrund einer angularen Relativbewegung zwischen dem vorderen Abgasrohr 2 und dem hinteren Abgasrohr 3 wird das Stützrohr 7 wegen der starren Verbindung mit dem vorderen Abgasrohr 2 seine Richtung relativ zu diesem Abgasrohr beibehalten, während der Metallbalg 1 sich angular verformt. Das Abstandselement 10 sorgt dann dafür, dass der Metallbalg 1 nicht durch Kontakt mit dem Stützrohr 7 beschädigt wird, sondern gegebenenfalls weich gedämpft in Kontakt mit dem Abstandselement 10 kommt.

In Figur 2 ist ein modifiziertes Ausführungsbeispiel dargestellt: Das Abstandselement 10 dieses Ausführungsbeispiels ist mehr zur Mitte des Metallbalgs 1 hin verschoben angeordnet und vor allem - wiederum als ein- oder mehrlagiger Drahtpressring ausgebildet - mit einem so hohen Volumen ausgestattet, dass es in permanentem Kontakt mit den Innenkrempen des Metallbalgs 1 steht. Einerseits wird hierdurch das Stützrohr 7 des Katalysators 8 im Metallbalg 1 abgestützt, so dass es beispielsweise nicht fest mit dem vorderen Abgasrohr 2 verbunden sein muss, sondern mit Hilfe des Abstandselements 10 schwimmend gelagert sein kann. Zum anderen jedoch ergibt sich durch den permanenten Kontakt des Abgaselements 10 mit dem Metallbalg 1 ein schwingungsdämpfender Effekt auf den Metallbalg 1, mittels dessen die Eigenfrequenzen des Metallbalgs 1 verstimmt oder etwaige Resonanzschwingungen gedämpft oder Schwingungen allgemein getilgt werden. Dies macht es möglich, im vorliegenden Ausführungsbeispiel auf ein außenliegendes dämpfendes Element, insbesondere ein Außengestricke 9 nach dem Vorbild des Ausführungsbeispiels gemäß Figur 1, zu verzichten. Es liegt auf der Hand, dass sich hierdurch Kostenvorteile durch Materialeinsparung sowie eine einfachere Herstellung des flexiblen Leitungsteils ergeben.

Der in Figur 2 dargestellte Drahtpressring, der das Abstandselement 10 bildet, kann selbstverständlich völlig anders geformt sein; es können auch mehrere Abstandselemente am Stützrohr 7 angebracht werden, oder das Abstandselement 10 kann wendelförmig um das Stützrohr 7 umlaufen und dergleichen mehr.

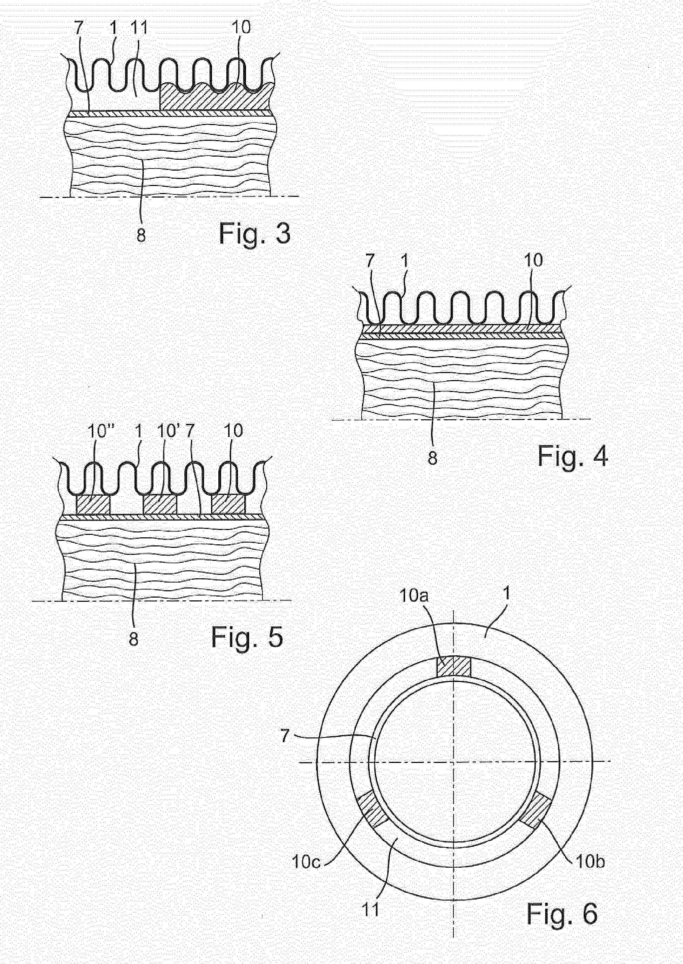

Die Figur 3, die nur noch einen Ausschnitt eines wie in den Figuren 1 und 2 dargestellten flexiblen Leitungsteils zeigt, visualisiert ein drittes Ausführungsbeispiel, das sich von den beiden vorhergehenden Ausführungsbeispielen dadurch unterscheidet, dass das Abstandselement 10 so auf dem Stützrohr 7 des Katalysators 8 sitzt, dass es den Ringraum zwischen dem Stützrohr 7 und dem Metallbalg 1 solcherart vollständig ausfüllt, dass es eine Dichtwirkung gegen Eindringen von heißen, durch den Katalysator 8 hindurchtretenden Abgasen in einen Zwischenraum 11 zwischen dem Stützrohr 7 und dem Metallbalg 1 erzeugt. Das Abstandselement 10 dieses Ausführungsbeispiels fungiert also nicht nur als Schutz gegen ein Anschlagen des Metallbalgs 1 gegen das Stützrohr 7, sondern auch als schwingungsdämpfendes Element für den Metallbalg 1 sowie zusätzlich als Dichtungselement für den Zwischenraum 11 und somit als Schutz für den Metallbalg 1 gegen heiße Abgase.

In Figur 4 ist in einer Darstellung entsprechend Figur 3 wiederum ein weiteres Ausführungsbeispiel der vorliegenden Erfindung dargestellt. Hier ist das Abstandselement 10 solcherart großflächig und mit einem solchen Volumen ausgestaltet, dass es den Bauraum zwischen dem Stützrohr 7 und den Innenkrempen des Metallbalgs 1 rundum vollständig ausfüllt. Auch hier vereinigt es wiederum drei Funktionen: Es wirkt als Schutz gegen mechanisches Anschlagen von Metallbalg 1 und Stützrohr 7, als schwingungsdämpfendes Element für den Metallbalg 1 sowie als Schutz des Metallbalgs 1 gegen die durch den Katalysator 8 hindurchtretenden heißen Abgase. Das Abstandselement 10 nach diesem Ausführungsbeispiel kann ein einlagiger oder mehrlagiger Gestrickeschlauch aus hitzebeständigen Fäden, insbesondere Metalldrähten und/oder Keramikfäden sein; es ist auch möglich, es als Drahtpressring oder als Gewebe mit dämpfenden Eigenschaften auszugestalten.

Figur 5 zeigt ein weiteres Ausführungsbeispiel mit einer weiteren Variante eines erfindungsgemäßen Abstandselements 10, 10', 10", wiederum in einer reduzierten Darstellung wie in den Figuren 3 und 4. Das Abstandselement liegt hier in Form von mehreren einzelnen Drahtkissen 10, 10', 10" vor, die sowohl axial verteilt als auch umfangsverteilt zwischen dem Stützrohr 7 des Katalysators 8 und dem Metallbalg 1 sitzen. Letzteres verdeutlicht Figur 6, die eine schematische Frontansicht des in Figur 5 dargestellten Ausführungsbeispiels ist. Durch die Drahtkissen 10, 10', 10" bzw. 10a, 10b, 10c in Längsausführung wird der Metallbalg 1 punktuell gegen das Stützrohr 7 abgestützt und gleichzeitig hinsichtlich seiner Resonanzschwingungen gedämpft, wobei durch die vorliegende, mehrteilige Ausbildung des Abstandselements 10 nochmals eine weitere Kostenersparnis erzielt werden kann; denn der Materialbedarf ist hier nochmals geringer, und auf eine weitere Bedämpfung des Metallbalgs 1, insbesondere ein Außengestricke 9, kann verzichtet werden.

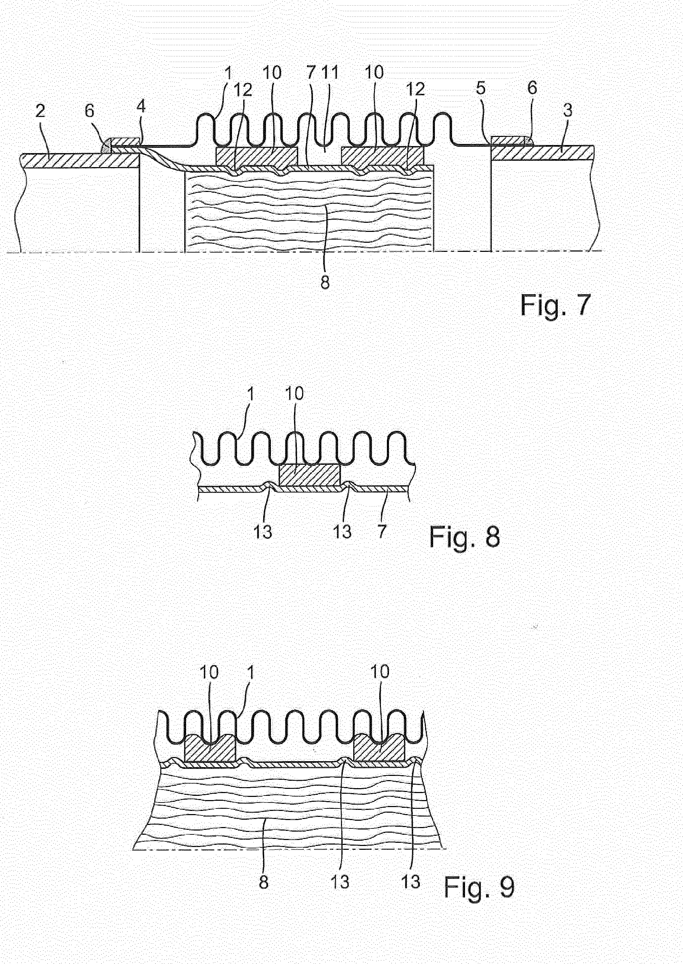

Figur 7 zeigt ein weiteres Ausführungsbeispiel, bei dem zwei Abstandselemente 10, die als umlaufende Drahtpressringe ausgebildet sind, auf dem Stützrohr 7 des Katalysators 8 fixiert sind, um die mechanische Stabilität der Anordnung zu erhöhen. Hier ist das Stützrohr 7 dort, wo die Abstandselemente 10 aufgesetzt werden, mit Nuten 12 versehen, in denen die Abstandselemente 10 verstemmt sind. Sie können demnach nicht axial verrutschen, was ansonsten möglicherweise durch die Beweglichkeit des Metallbalgs 1 und langfristig einwirkende Vibrationen zu befürchten sein könnte.

Figur 8 zeigt ein Detail aus Figur 7 in einer anderen Variante: Hier wird ein Abstandselement 10, das, wie im Ausführungsbeispiel nach Figur 5, als Drahtkissen ausgebildet ist, zwischen einer oder mehreren Teil- oder Vollsicken oder Noppen 13 im Stützrohr 7 gehalten und dort mittels permanentem Kontakt mit dem Metallbalg 1 fixiert.

Ein weiteres Ausführungsbeispiel für eine weitere Variante der vorliegenden Erfindung ist in Figur 9 dargestellt. Dort wird ein Katalysator 8 verwendet, der nicht in einem Stützrohr sitzt, sondern frei tragend in den Metallbalg 1 hineinreicht. Die Funktion des Stützrohrs wird hier von den erfindungsgemäßen Abstandselementen 10 übernommen, die als Drahtpressringe ausgebildet sind und wiederum mittels Sicken 13 an einem Verrutschen auf dem Katalysator 8 gehindert werden. Eine leichte Wellenform des Außenumfangs der Abstandselemente 10 sorgt dafür, dass diese sich besser an den Metallbalg 1 anschmiegen und so nicht nur eine gute Bedämpfung des Metallbalgs 1 sicherstellen, sondern den Katalysator 8 sicher im Metallbalg 1 fixieren sowie verhindern, dass der Metallbalg 1 und der Katalysator 8 sich gegenseitig berühren.

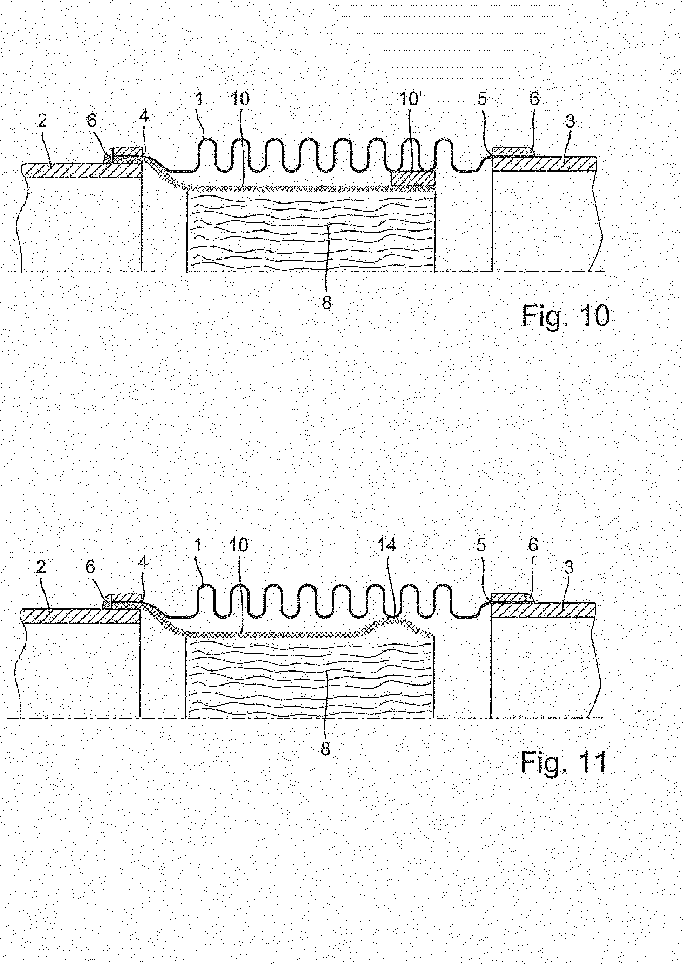

Figur 10 zeigt ein weiteres Ausführungsbeispiel eines erfindungsgemäßen flexiblen Leitungsteils, wobei hier das erfindungsgemäße Abstandselement 10 wiederum die Funktion eines Stützrohrs für den Katalysator 8 übernimmt, diesmal jedoch in Form eines flexiblen Leitrohrs, das insbesondere als Drahtgeflecht ausgebildet sein kann. Insbesondere in diesem Fall ist es dann von Vorteil, wenn ein zusätzliches Abstandselement 10', das hier als Drahtpressring ausgebildet ist, außen auf dem als Geflechtsschlauch ausgebildeten Abstandselement 10 sitzt, um die nachgiebige mechanische Dämpfung eines etwaigen Anschlagens des Metallbalgs 1 am Katalysator 8 sowie gegebenenfalls auch die Bedämpfung des Metallbalgs 1 hinsichtlich seiner Resonanzschwingungen sicherstellt.

Die Funktion des als Drahtpressring ausgestalteten Abstandselements 10' aus Figur 10 übernimmt im Ausführungsbeispiel, das in Figur 11 dargestellt ist, eine Ausbauchung 14 oder eine mehrlagige Umkrempelung oder dergleichen Verdickung des als flexibles Stützrohr ausgebildeten Abstandselements 10, das vorliegend vorzugsweise als Gestrickeschlauch ausgebildet ist. Hierdurch erhält man ein flexibles Leitungsteil der vorliegenden Art mit einem Metallbalg 1 und einem Katalysator 8 bzw. Partikelfilter, die ineinander angeordnet sind, mit einem Anschlagsschutz und einer Bedämpfung des Metallbalgs 1 sowie einer Abstützung des Katalysators 8 im Metallbalg 1 mit geringstmöglichem Materialeinsatz.

Im Rahmen der vorliegenden Erfindung sind selbstverständlich auch andere Modifikationen und Variationen als diejenigen, die in den Zeichnungen dargestellt sind, möglich.

## Patentansprüche

1. Flexibles Leitungsteil für eine Abgasleitung (2, 3) eines Verbrennungsmotors, umfassend einen zumindest abschnittsweise ringgewellten oder schraubengangförmig gewellten Metallbalg (1) mit einem stromaufwärts angeordneten, zylindrischen vorderen Endabschnitt (4) und einem stromabwärts angeordneten, zylindrischen hinteren Endabschnitt (5), sowie einen direkt oder indirekt am zylindrischen vorderen Endabschnitt (4) des Metallbalgs (1) angebrachten Katalysator (8) und/oder Partikelfilter zur Reinigung eines Abgasstroms des Verbrennungsmotors, wobei der Katalysator (8) und/oder Partikelfilter zumindest teilweise innerhalb des Metallbalgs (1) angeordnet ist und dort einen Außendurchmesser aufweist, der kleiner als die lichte Weite des Metallbalgs (1) ist,
**dadurch gekennzeichnet,**
**dass** auf dem Außenumfang des Katalysators (8) und/oder Partikelfilters, oder auf einem diesen umgebenden Stützrohr (7) ein Abstandselement (10) mit dämpfenden Eigenschaften sitzt.

2. Flexibles Leitungsteil nach Anspruch 1;
**dadurch gekennzeichnet,**
**dass** das Abstandselement (10) aus einem Drahtgestricke oder einem Drahtpressring aus hitzebeständigen, insbesondere metallischen und/oder keramischen Drähten gefertigt ist.

3. Flexibles Leitungsteil nach Anspruch 2,
**dadurch gekennzeichnet,**
**dass** das Abstandselement (10) aus mindestens einem ein- oder mehrlagigen Gestrickeschlauch und/oder Gestrickering und/oder Gestrickestreifen und/oder Drahtpressstreifen und/oder Drahtpressring und/oder Gewebering und/oder Gewebeschlauch und/oder aus mehreren einzelnen Gestrickekissen besteht.

4. Flexibles Leitungsteil nach mindestens einem der Ansprüche 1 bis 3,
**dadurch gekennzeichnet,**
**dass** das Abstandselement (10) zumindest abschnittsweise permanent in Kontakt mit dem Metallbalg (1) steht.

5. Flexibles Leitungsteil nach Anspruch 4,
**dadurch gekennzeichnet,**
**dass** zumindest ein Teil des Abstandselements (10) ringförmig ausgebildet ist, im Bereich eines stromabwärtigen Endes des Katalysators (8) oder Partikelfilters auf diesem oder seinem Stützrohr (7) sitzt und einen Ringraum (11) zwischen einerseits dem Katalysator (8) oder Partikelfilter oder seinem Stützrohr (7) und andererseits dem Metallbalg (1) vollständig ausfüllt.

6. Flexibles Leitungsteil nach mindestens einem der Ansprüche 1 bis 5,
**dadurch gekennzeichnet,**
**dass** das Abstandselement (10) auf einem Stützrohr (7) des Katalysators (8) und/oder Partikelfilters sitzt und dort mittels Sicken (13), Wülsten oder Ausbrechungen oder dergleichen fixiert ist.

7. Flexibles Leitungsteil nach mindestens einem der Ansprüche 1 bis 5,
**dadurch gekennzeichnet,**
**dass** das Abstandselement (10) direkt auf dem Katalysator (8) und/oder Partikelfilter sitzt und diesen umlaufend oder umfangsverteilt am Metallbalg (1) radial abstützt.

8. Flexibles Leitungsteil nach mindestens einem der Ansprüche 1 bis 7,
**dadurch gekennzeichnet,**
**dass** das Abstandselement (10) den Katalysator (8) und/oder Partikelfilter im wesentlichen ganzflächig umgibt und die Funktion eines Stützrohrs (7) übernimmt.

9. Flexibles Leitungsteil nach Anspruch 8,
**dadurch gekennzeichnet,**
**dass** das Abstandselement (10) radiale Verdickungen (14) aufweist und/oder dass ein zweites Abstandselement (10') auf ihm sitzt.

10. Flexibles Leitungsteil nach mindestens einem der Ansprüche 1 bis 9,
**dadurch gekennzeichnet,**
**dass** außen auf dem Metallbalg (1) ein schwingungsdämpfendes Element (9) sitzt.

11. Flexibles Leitungsteil nach mindestens einem der Ansprüche 1 bis 10,
**dadurch gekennzeichnet,**
**dass** das Stützrohr über den Katalysator übersteht und gleichzeitig als Flammrohr den Balg vor Hitze schützt.

12. Flexibles Leitungsteil nach mindestens einem der Ansprüche 1 bis 11,
**dadurch gekennzeichnet,**
**dass** das Stützrohr oder Stützgeflecht ein- oder mehrlagig ausgebildet ist und damit als Luftspaltisolierung gegenüber dem Balg wirkt.
